(19) Europäisches Patentamt
European Patent Office
Office européen des brevets

(11) **EP 4 216 564 B1**

(12) **FASCICULE DE BREVET EUROPEEN**

(45) Date de publication et mention
de la délivrance du brevet:
**20.11.2024 Bulletin 2024/47**

(21) Numéro de dépôt: **23153022.1**

(22) Date de dépôt: **24.01.2023**

(51) Classification Internationale des Brevets (IPC):
**H04N 25/771** (2023.01)     **H04N 25/671** (2023.01)

(52) Classification Coopérative des Brevets (CPC):
**H04N 25/771; H04N 25/57; H04N 25/671; H04N 25/772**

(54) **CALIBRATION D'UN PIXEL NUMÉRIQUE IWR D'IMAGEUR**

KALIBRIERUNG EINES DIGITALEN IWR-PIXELS EINES BILDSENSORS

IMAGE SENSOR IWR DIGITAL PIXEL CALIBRATION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **25.01.2022 FR 2200606**

(43) Date de publication de la demande:
**26.07.2023 Bulletin 2023/30**

(73) Titulaire: **Commissariat à l'Energie Atomique et aux Energies Alternatives**
**75015 Paris (FR)**

(72) Inventeur: **NICOLAS, Jean-Alain**
**38054 GRENOBLE CEDEX 09 (FR)**

(74) Mandataire: **Brevalex**
**Tour Trinity**
**1 B Place de la Défense**
**92400 Courbevoie (FR)**

(56) Documents cités:
**US-A1- 2011 303 846     US-A1- 2016 261 811**
**US-A1- 2021 136 306**

**Description**

**DOMAINE TECHNIQUE**

La présente invention se rapporte au domaine des dispositifs d'imagerie et en particulier ceux dotés de pixels de type IWR (« Integrate While Read », i.e. Intégrer tout en lisant) pour lesquels une phase d'intégration et une phase de lecture d'une intégration précédente peuvent se dérouler en même temps.

Elle concerne plus particulièrement les pixels dotés d'une architecture à comptage de paquets de charge et exploitation du résidu de tension sur la capacité d'intégration et prévoit un dispositif amélioré permettant une mesure de paramètres particuliers d'un pixel IWR afin d'évaluer les dispersions par rapport aux autres pixels d'un même imageur et de pouvoir effectuer une calibration d'une grande partie du bruit spatial fixe présent sur l'imageur.

**ÉTAT DE LA TECHNIQUE ANTÉRIEURE**

Un imageur ou capteur d'image est typiquement formé d'une matrice de pixels, chaque pixel étant muni d'un photo-détecteur, par exemple une photodiode ou un phototransistor, servant à convertir un rayonnement électromagnétique en un signal électrique. Le photo-détecteur est associé à un circuit de lecture.

Certains imageurs sont conçus pour détecter une gamme particulière de longueurs d'ondes et fonctionner par exemple dans l'infra-rouge. Quelle que soit la gamme de longueurs d'ondes pour laquelle un imageur est conçu, son but est de restituer fidèlement, sur toute sa surface, une image numérique dans une plage de fonctionnement la plus large possible allant des plus faibles aux plus fortes intensités qu'il doit pouvoir mesurer. Il s'agit de permettre de convertir et de mesurer avec une résolution aussi élevée que possible le rayonnement électromagnétique capté.

Un principe de lecture de la mesure consiste, pendant une période de temps prédéfinie appelée temps d'intégration Tint, à intégrer un courant Id issu du photo détecteur en chargeant ou déchargeant une capacité d'intégration qui aura été préalablement chargée ou déchargée à une valeur prédéterminée.

En fonction de la valeur du courant Id, qui est proportionnelle à l'énergie lumineuse captée, on décharge plus ou moins vite la capacité d'intégration.

Il s'avère cependant difficile de pouvoir prévoir une capacité d'intégration de valeur suffisante pour permettre de satisfaire une plage de fonctionnement souhaitable en termes de minimum et de maximum d'énergies lumineuses mesurables.

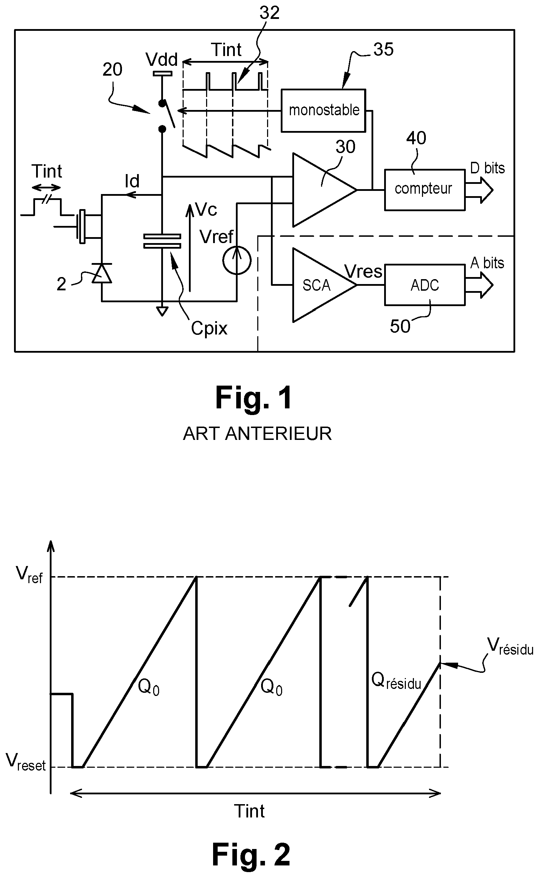

Un circuit dont le schéma de principe est représenté sur la figure 1 permet de pallier cette difficulté.

Comme on ne peut disposer d'une capacité d'une valeur suffisante dans chaque pixel, la capacité d'intégration est chargée ou déchargée plusieurs fois, et le nombre de charges ou de décharges varie en fonction de l'énergie lumineuse captée par une diode 2, ce nombre étant typiquement d'autant plus important que le courant de décharge Id est élevé.

Dans ce circuit, on laisse une tension Vc aux bornes d'une capacité d'intégration Cpix évoluer entre une première tension fixe, de réinitialisation, dans cet exemple égale à une tension d'alimentation VDD de la capacité Cpix et une deuxième tension fixe, de seuil, dans cet exemple notée Vréf. Quand la tension Vc aux bornes de la capacité d'intégration Cpix atteint la tension Vréf, un circuit comparateur 30 le détecte et un étage 35 générateur d'impulsion génère automatiquement une impulsion de ré-initialisation 32 sous forme d'une injection de charge Qo qui entraîne, à travers un interrupteur 20, une recharge de la capacité d'intégration Cpix. Un re-bouclage est ainsi formé.

Quand l'interrupteur 20 devient conducteur pendant la durée d'une impulsion de réinitialisation, une recharge rapide de la capacité d'intégration Cpix, est obtenue. Les cycles de charge et de décharge se reproduisent automatiquement pendant toute la durée d'intégration Tint à travers le re-bouclage décrit ci-dessus. Le nombre de cycles complets de charge et de décharge est compté, dans chaque pixel, par un compteur 40.

Ce nombre fournit donc une mesure de la quantité d'énergie lumineuse captée par la photodiode 2 pendant le temps d'intégration Tint.

La valeur du courant Id, qui est proportionnelle à l'énergie lumineuse captée, dépend du nombre de cycles complets de charge (ou décharge).

Pour augmenter la précision de la mesure, c'est-à-dire obtenir l'écart le plus faible possible entre deux signaux mesurables, on peut chercher à effectuer une mesure d'une tension résiduelle $v_{résidu}$ restant aux bornes de la capacité d'intégration lors de la dernière charge ou décharge interrompue par l'écoulement du temps d'intégration Tint.

Une telle tension est illustrée de manière schématique sur la figure 2 dans un cas particulier où la tension d'intégration varie entre une tension de réinialisation Vreset et une tension de seuil Vref, la tension de seuil Vref étant cette fois supérieure à la tension de réinialisation.

On décompte un nombre de charges Qo de la capacité d'intégration Cint pendant le temps d'intégration Tint et la résolution de quantification étant Qo, on cherche à avoir Qo faible et donc un grand nombre de bits pour obtenir une résolution convenable et un bruit de quantification faible.

En fin d'intégration, on obtient une information numérique provenant du compteur de chaque pixel ainsi que l'information de la tension de résidu numérisée en pied de colonne par un convertisseur analogique numérique 50.

Toutefois l'information du compteur 40 ne représente qu'un nombre de paquets de charge. On cherche donc à connaître la valeur de ce paquet de charge $Q_0$. Ce résultat peut être obtenu grâce à la connaissance de Cpix, Vreset et Vref. Une difficulté est que chaque pixel est sujet à des dispersions de paramètres des composants qui le composent, notamment les transistors du comparateur 30 qui détecte le passage de la tension de la capacité d'intégration au-dessus de la tension de seuil Vref. Il en résulte que la tension de déclenchement de la réinitialisation peut varier d'un pixel à l'autre. Cette tension pour le $i_{ème}$ pixel de la matrice peut être égale à Vref+Voffset(i). De même, la tension de réinitialisation Vreset peut ne pas être exactement la même pour chaque pixel du fait des différentes chutes de tension dans les connexions distribuant la tension de réinitialisation Vreset dans la matrice de pixels.

Le document EP 2 687 020 B1 donne une architecture et une méthodologie pour venir mesurer précisément pour chaque pixel de telles informations Vseuil+Voffset(i) et Vreset(i).

Dans l'un ou l'autre des dispositifs précités, le circuit de lecture permettant de réaliser le comptage de paquets de charges et d'utiliser la tension de résidu, fonctionne selon un mode ITR (« Integrate Then Read », i.e. « intégrer puis lire ») c'est-à-dire pour lequel une phase d'intégration et une phase de lecture se déroulent de manière successive.

Or, pour certaines applications, on peut chercher à vouloir maximiser le temps d'intégration afin de capter le plus possible de signal (photons) tout en limitant le temps pendant lequel on n'observe pas une scène. Il existe pour cela des pixels dont le circuit de lecture fonctionne selon un mode dit « IWR » (« Integrate While Read », i.e. « intégrer pendant que l'on lit ») pour lequel la phase d'intégration et la phase de lecture se déroulent en même temps.

Par rapport aux pixels ITR, les pixels IWR comportent en outre typiquement une capacité supplémentaire dite « de mémorisation ».

La calibration mise en oeuvre dans le document EP 2 687 020 B1 évoqué précédemment est efficace dans le cadre d'un pixel fonctionnement en mode ITR mais dans le cas d'un pixel IWR peut s'avérer insuffisante.

## EXPOSÉ DE L'INVENTION

Selon un aspect, la présente invention concerne un dispositif imageur comportant une pluralité de pixels chaque pixel étant formé d'un photo-détecteur associé et connecté à un circuit de lecture, comprenant :

- une capacité d'intégration, connectée à un premier noeud et prévue pour stocker des charges provenant du photo-détecteur,
- un premier transistor de réinitialisation configuré pour, lorsqu'il est rendu passant, réinitialiser la capacité d'intégration,
- au moins un transistor dit « de couplage », agencé entre le photo-détecteur et la capacité d'intégration et apte alternativement à, coupler le photo-détecteur au premier noeud lorsqu'il est rendu passant, et découpler le photo-détecteur du premier noeud lorsqu'il est rendu non-passant,
- une capacité de mémorisation connectée à un deuxième noeud,
- un second transistor de réinitialisation configuré pour, lorsqu'il est rendu passant, réinitialiser la capacité de mémorisation,
- un interrupteur dit « de mémorisation » entre la capacité d'intégration et la capacité de mémorisation, pour, lorsqu'il est rendu passant, connecter la capacité d'intégration et la capacité de mémorisation, et lorsqu'il est rendu non-passant, déconnecter la capacité d'intégration de la capacité de mémorisation.

Ainsi, avec l'introduction d'un interrupteur de mémorisation et d'un transistor de couplage on met en oeuvre un pixel de type IWR et qui permet de faire adopter différentes configurations suivant que l'on se trouve dans un mode de fonctionnement normal ou bien selon un mode de fonctionnement dans lequel on réalise une ou plusieurs mesures en vue d'effectuer une calibration.

Avantageusement, le dispositif comprend en outre : un circuit de commande du circuit de lecture configuré pour, lors d'un cycle de mesure comportant une phase d'estimation d'un rapport R = Cint/Cmem entre une valeur de capacité d'intégration et une valeur de capacité de mémorisation :

- selon une première partie de ladite phase d'estimation dudit rapport R rendre passant le premier transistor de réinitialisation et le deuxième transistor de réinitialisation de sorte respectivement à réinitialiser la capacité d'intégration et la capacité de mémorisation et rendre non-passant ledit interrupteur de mémorisation de sorte à déconnecter la capacité d'intégration de la capacité de mémorisation et au cours de la première phase et au cours de la première partie, découpler le photo-détecteur dudit premier noeud, puis,
- selon une deuxième partie de ladite phase d'estimation rendre bloqués le premier transistor de réinitialisation et le deuxième transistor de réinitialisation et rendre passant ledit interrupteur de mémorisation de sorte à relier le premier noeud et le deuxième noeud, et pouvoir ainsi évaluer un potentiel audit deuxième noeud représentatif dudit rapport R= Cint/Cmem.

On tient compte en évaluant ce rapport R d'un effet de compression qui intervient lorsque l'on relie les capacités d'intégration et de mémorisation. Cette compression dépend du rapport Cint/Cmem, Cint représente une valeur de la capacité d'intégration mais aussi toutes les capacités parasites qui se rajoutent sur ce noeud, notamment la capacité d'entrée du comparateur. De même, Cmem représente la valeur de la capacité de mémorisation ainsi que les capacités parasites qui se rajoutent à ce noeud. Des dispersions sur ces valeurs de pixel à pixel entraînent donc une différence de pixel à pixel sur ce rapport de capacités. En évaluant ce rapport R, on ajoute des données de corrections permettant de réaliser une calibration améliorée de chaque pixel.

Avantageusement, le circuit de lecture comporte en outre :

- un comparateur relié à la capacité d'intégration, une première entrée du comparateur étant couplée au premier noeud, une deuxième entrée du comparateur étant mise à une tension de référence,
- un générateur d'impulsions en sortie du comparateur et configuré pour, lorsqu'il est couplé au premier transistor de réinitialisation et lorsque la première entrée atteint la tension de référence, émettre une impulsion de déclenchement d'une réinitialisation de la capacité d'intégration par l'intermédiaire du premier transistor de réinitialisation.

Le circuit de lecture peut également comprendre :

- un compteur d'impulsions en sortie du générateur d'impulsions
- un élément de mémorisation de données numérique de comptage issue dudit compteur d'impulsions.

Selon une possibilité de mise en oeuvre, le circuit de commande peut être configuré pour produire un signal de commande de mode de fonctionnement pour, lors de ladite phase d'estimation dudit rapport,

durant ladite première partie : mettre ledit signal de commande de mode de fonctionnement dans un premier état de sorte à placer le bloc générateur d'impulsions dans un premier mode de fonctionnement dans lequel le bloc générateur d'impulsions maintient en sortie quelle que soit la première entrée un signal de déclenchement d'une réinitialisation de la capacité d'intégration, puis pour,
lors de la deuxième partie : mettre ledit signal de commande dans un deuxième état de sorte à placer le bloc générateur d'impulsions dans un deuxième mode correspondant audit mode de fonctionnement normal.

Selon un mode de réalisation avantageux, le dispositif peut comprendre en outre un circuit de commutation muni d'au moins un premier interrupteur agencé entre la sortie du comparateur et le premier transistor de réinitialisation et un deuxième interrupteur agencé entre la sortie du générateur d'impulsions.

Le premier transistor de réinitialisation et le deuxième interrupteur peuvent être pilotés par le circuit de commande et prévus pour respectivement, relier directement la sortie du comparateur au transistor de réinitialisation lors d'au moins phase du cycle de mesure d'évaluation de la tension de référence, et pour relier la sortie du générateur d'impulsions au premier transistor de réinitialisation lors d'au moins une autre phase du cycle de mesure ou d'un cycle dit « de fonctionnement normal ».

Le circuit de commande du circuit de lecture peut être configuré en outre pour, lors de la phase d'évaluation de la tension de référence Vréf en entrée du comparateur :

- rendre passant le premier interrupteur tout en rendant non-passant le deuxième interrupteur, tout en connectant le premier noeud au deuxième noeud, de sorte à pouvoir évaluer une valeur de la tension de référence en fonction d'un potentiel audit deuxième noeud.

Selon une possibilité de mise en oeuvre pour laquelle la réinitialisation de la capacité de mémorisation se fait à une première tension de réinitialisation et le circuit de commande peut être configuré pour, lors d'une phase d'évaluation de ladite première tension de réinitialisation dudit cycle de mesure, réinitialiser la capacité d'intégration tout en rendant passant ledit interrupteur de mémorisation de sorte à connecter la capacité d'intégration à la capacité de mémorisation.

Selon une possibilité de mise en oeuvre pour laquelle la réinitialisation de la capacité de mémorisation se fait à une deuxième tension de réinitialisation, le circuit de commande peut être configuré pour, lors d'une phase d'évaluation de la deuxième tension de réinitialisation dudit cycle de mesure : réinitialiser la capacité de mémorisation tout en rendant non-passant ledit interrupteur de mémorisation de sorte à déconnecter la capacité d'intégration de la capacité de mémorisation.

Avantageusement, le transistor de couplage peut être agencé en série avec un étage de polarisation du photo-détecteur, en particulier un étage de polarisation à injection directe (DI) ou à injection directe contre-réactionnée (BDI).

Le transistor de couplage comporte typiquement une électrode parmi ses électrodes de source ou de drain connectée à une électrode du photo-détecteur et une autre électrode parmi ses électrodes de drain ou de source connectée à la capacité d'intégration, le circuit de commande du circuit de lecture étant configuré pour, lors de la première étape de ladite phase d'évaluation dudit rapport R appliquer à la grille du transistor de couplage, un signal de déclenchement du découplage entre le photo-détecteur et ledit premier noeud.

Selon un mode de réalisation particulier, le transistor de couplage peut être un transistor de polarisation à injection directe (DI) du photo-détecteur.

Avantageusement, le circuit de lecture peut être doté en outre d'un transistor suiveur couplé au deuxième noeud et d'un transistor de sélection de ligne.

Selon une possibilité de mise en oeuvre, le premier transistor de réinitialisation comporte une électrode mise à une première tension de réinitialisation tandis que le second transistor de réinitialisation comporte une électrode mise à une deuxième tension de réinitialisation distincte de la première tension de réinitialisation.

Cela permet de mieux adapter la plage de tension de la dynamique de sortie on peut prévoir une tension de réinitialisation différente pour la capacité de mémorisation.

## BRÈVE DESCRIPTION DES DESSINS

La présente invention sera mieux comprise sur la base de la description qui va suivre et des dessins en annexe sur lesquels :

La figure 1 sert à illustrer un circuit de lecture d'un pixel d'imageur suivant l'art antérieur et de type ITR;

La figure 2 sert à illustrer l'évolution d'une tension aux bornes d'une capacité d'intégration pendant un temps d'intégration et une tension résiduelle que l'on souhaite pouvoir déterminer à l'issue de ce temps d'intégration;

La figure 3 sert à illustrer un exemple de réalisation d'un circuit de lecture d'un pixel d'imageur de type IWR et tel que mis en oeuvre suivant l'invention;

La figure 4 sert à illustrer un exemple de séquence de signaux de commande de différents éléments du circuit de lecture et qui peuvent être effectuées lors de différentes phases d'évaluation mises en oeuvre lors d'un cycle de mesure effectué sur le pixel d'imageur IWR tel que mis en oeuvre suivant l'invention;

La figure 5 sert à illustrer une variante de réalisation de circuit de lecture muni d'un transistor à injection direct pour la polarisation du photo-détecteur et d'un transistor de couplage agencé entre le photo-détecteur et la capacité d'intégration et permettant d'isoler la photo-détecteur du reste du circuit de lecture;

La figure 6 sert à illustrer une variante de réalisation pour laquelle l'ordre de répartition du transistor à injection direct et du transistor de couplage entre le photo-détecteur et la capacité d'intégration est inverse de celui de la figure 6;

La figure 7 sert à illustrer une variante de réalisation de circuit de lecture avec un étage de polarisation différent d'une polarisation par injection directe et mis en série avec un transistor de couplage agencé entre le photo-détecteur et la capacité d'intégration;

La figure 8 sert à illustrer une variante de réalisation pour laquelle l'ordre de répartition de l'étage de polarisation et du transistor de couplage est inverse de celui de la figure 7;

La figure 9 sert à illustrer une variante de réalisation de circuit de lecture avec un transistor d'injection directe qui sert de transistor de couplage agencé entre le photo-détecteur et la capacité d'intégration;

La figure 10 sert à illustrer une variante de réalisation de circuit de lecture avec un transistor de couplage mais qui est dépourvu d'étage de polarisation du photodétecteur;

La figure 11 sert à illustrer une autre variante d'agencement du circuit de lecture adaptée à une connexion de ce dernier sur une zone P d'une photodiode de type P sur N;

Les figure 12A, 12B donnent des résultats de simulation de linéarité d'un pixel pour des valeurs arbitraires de capacité d'intégration et de mémorisation et pour des valeurs obtenues par le biais d'une méthode de calibration telle que mise en oeuvre suivant l'invention;

Les figures 13A, 13B servent à illustrer une variante d'agencement du circuit de lecture;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

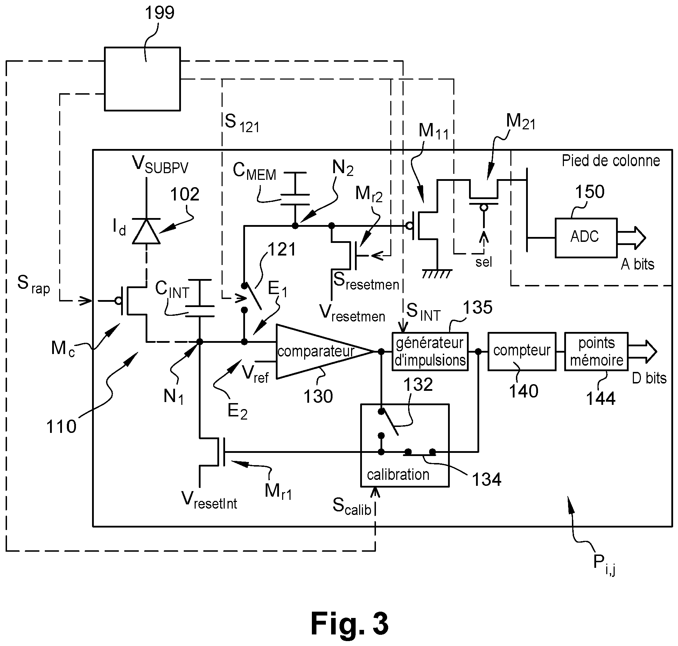

Un exemple de structure d'un circuit de lecture 110 d'imageur tel que mis en oeuvre suivant un mode de réalisation de la présente invention est donné sur la figure 3.

Le circuit de lecture 110 est connecté à un photo-détecteur, par exemple une photodiode 102, qui transforme un rayonnement électromagnétique en un courant électrique Id. La photodiode 102 et le circuit de lecture 110 associés forment un élément de détection également appelé « pixel ». L'imageur compte typiquement une pluralité de pixels $P(i, j)$ qui peuvent être agencés en matrice de i ligne(s) et de j colonne(s) (i, j étant des entiers égaux ou supérieurs à 1).

Selon un exemple de réalisation particulier, la photodiode 102 peut être destinée à travailler dans le domaine de l'infra-rouge, la photodiode 102 étant alors typiquement polarisée en inverse et délivrant au circuit de lecture 110 un courant Id représentatif d'une scène observée.

Le circuit de lecture 110 a ici une structure de type IWR (pour « Integrate While Read » ou Intégration pendant lecture) qui, du fait de la présence d'un étage de mémorisation, lui permet d'effectuer une intégration pendant qu'une lecture d'une valeur de signal résultant d'une précédente intégration est effectuée.

Ainsi, outre une capacité d'intégration $C_{INT}$, connectée à un premier noeud $N_1$, le circuit de lecture 110 est muni d'une capacité de mémorisation $C_{MEM}$ connectée à un deuxième noeud $N_2$.

Le circuit de lecture 110 a ici pour particularité d'être pourvu également d'un interrupteur 121 dit « de mémorisation » entre le premier noeud $N_1$ et le deuxième noeud $N_2$.

Cet interrupteur 121 typiquement formé d'un ou plusieurs transistors est configuré pour, lorsqu'il est rendu passant (i.e. fermé), connecter la capacité d'intégration $C_{INT}$ et la capacité de mémorisation $C_{MEM}$, et lorsqu'il est rendu non-passant (i.e. ouvert), déconnecter la capacité d'intégration $C_{INT}$ de la capacité de mémorisation $C_{MEM}$. Un tel interrupteur 121 permet ainsi au circuit de lecture 110 d'adopter différentes configurations notamment en fonction de différents phases d'un cycle de mesure que le circuit de lecture 110 est susceptible d'adopter afin de pouvoir effectuer une calibration du pixel. L'interrupteur 121 de mémorisation permet alternativement d'isoler entre elles ou de connecter entre elles une portion du circuit de lecture 110 couplée au premier noeud $N_1$ et à la capacité d'intégration $C_{INT}$ et une autre une portion du circuit de lecture couplée au deuxième noeud $N_2$ et à la capacité de mémorisation $C_{MEM}$.

Dans cette structure où l'on peut venir relier la capacité d'intégration $C_{INT}$ et la capacité de mémorisation $C_{MEM}$ par l'intermédiaire de l'interrupteur 121 afin de mémoriser une tension de résidu, on cherche à tenir compte d'un effet de compression qui peut intervenir lorsque l'on relie les deux capacités $C_{INT}$ et $C_{MEM}$. Cette compression dépend d'un rapport $R = Cint/Cmem$ qui peut être propre à chaque pixel et que l'on souhaite ici évaluer, Cint représentant une valeur de la capacité d'intégration aux capacités parasites près qui se rajoutent sur le premier noeud $N_1$, notamment une capacité d'entrée d'un comparateur 130. De même, Cmem représente une valeur de capacité de mémorisation aux capacités parasites près qui se rajoutent sur le deuxième noeud $N_2$. Des dispersions sur ces valeurs de pixel à pixel entraînent donc une différence de pixel à pixel sur ce rapport R que l'on cherche à évaluer.

On cherche à réaliser une mesure de ce rapport R sans introduire trop de composants supplémentaires et en particulier trop de transistors supplémentaires dans le pixel.

Une phase particulière d'évaluation d'un cycle de mesure est mise en oeuvre pour évaluer ce rapport R.

Selon une première partie de cette phase d'évaluation du rapport R, on commence par réinitialiser chaque capacité $C_{INT}$, $C_{MEM}$ indépendamment, à leurs tensions de réinitialisation respectives Vresetmem, VresetInt. De manière avantageuse, ces tensions de réinitialisation Vresetmem, VresetInt peuvent être différentes l'une de l'autre. Des tensions de réinitialisation respectives Vresetmem, VrestInt différentes peuvent permettre en particulier d'étendre la dynamique de détection.

La réinitialisation de la capacité d'intégration $C_{INT}$ est mise en oeuvre par le biais d'un premier transistor de réinitialisation $Mr_1$ couplé au premier noeud $N_1$.

Lorsqu'il est rendu passant, le premier transistor de réinitialisation $Mr_1$ permet d'appliquer une première tension de réinitialisation VresetInt à la capacité d'intégration $C_{INT}$. La réinitialisation de la capacité de mémorisation $C_{MEM}$ est mise en oeuvre par le biais d'un deuxième transistor de réinitialisation $Mr_2$ couplé au noeud $N_2$. Lorsqu'il est rendu passant, le deuxième transistor de réinitialisation $Mr_2$ permet d'appliquer une deuxième tension de réinitialisation Vresetmem à la capacité de mémorisation $C_{MEM}$.

Puis, selon une deuxième partie de cette phase d'évaluation du rapport R, la réinitialisation est stoppée en désactivant, autrement dit en rendant bloqués ou non-passants, les transistors de réinitialisation $Mr_1$ et $Mr_2$ et en reliant entre elles les capacités $C_{INT}$, $C_{MEM}$ par l'intermédiaire de l'interrupteur 121 de mémorisation rendu passant.

Préalablement, à cette deuxième partie de phase, le courant de photodiode 102 est coupé par l'intermédiaire d'un transistor de couplage Mc agencé entre la capacité d'intégration $C_{INT}$ et le photo-détecteur.

Pour permettre de réaliser la phase d'évaluation du rapport R un circuit de commande 199 du circuit de lecture 110 est prévu et permet d'appliquer différents signaux de commande. Le circuit de commande 199 est typiquement un circuit extérieur au pixel et à la matrice et en particulier doté d'un bloc logique. Le circuit de commande 199 peut être également réalisé par le biais d'un microprocesseur ou d'un circuit logique programmable (FPGA).

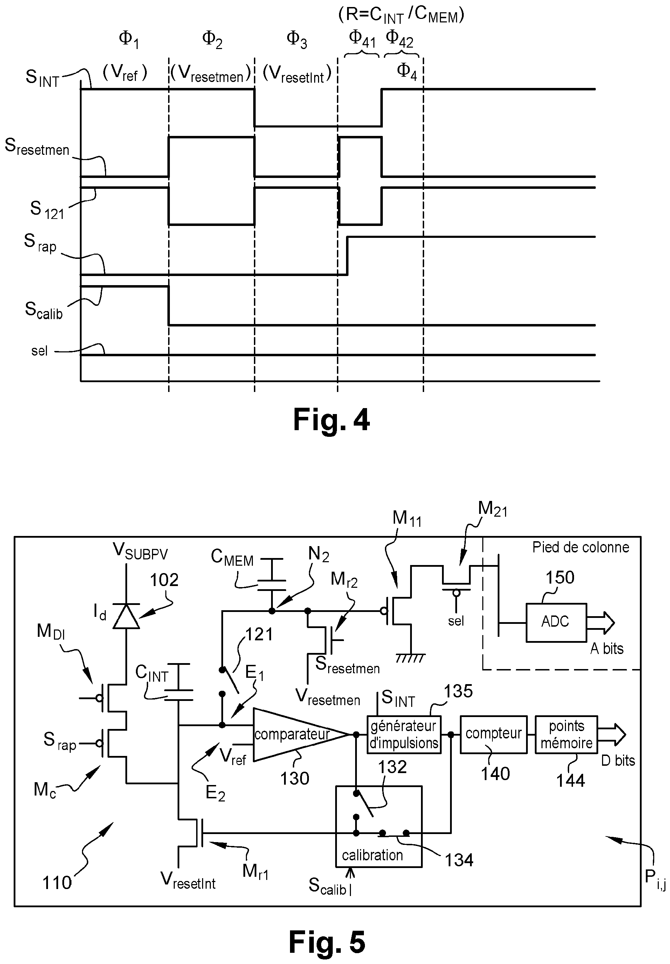

Un exemple de chronogramme d'évolution de signaux de commande est donné sur la figure 4. La phase d'évaluation du rapport R est ici référencée $\Phi 4$ sur cette figure et fait partie d'un cycle de mesure durant lequel différents paramètres peuvent être évalués. Sur cette figure 4, les signaux Sresetmem, Srap, sont des signaux appliqués respectivement sur la grille du deuxième transistor de réinitialisation Mr$_2$, sur la grille du transistor de couplage Mc, et permettant de les rendre alternativement passants ou bloqués, tandis que le signal S$_{121}$ est un signal de commande de l'interrupteur 121. L'état ouvert ou fermé (i.e. respectivement non-passant ou passant) de l'interrupteur de mémorisation 121 peut être ainsi piloté par le biais du signal S$_{121}$ issu du circuit de commande 199.

Le signal S$_{INT}$ est unsignal de commande appliqué sur un bloc 135 générateur d'impulsions et qui permet, en fonction de son état, de mettre alternativement un bloc 135 générateur d'impulsions dans un premier mode de fonctionnement ou dans un deuxième mode de fonctionnement.

En appliquant le signal S$_{INT}$ à cet endroit du dispositif, on peut avantageusement utiliser le même transistor de réinitialisation Mr1 pour décharger la capacité d'intégration C$_{INT}$ à chaque dépassement de tension de seuil Vref, mais également pour maintenir le premier noeud N$_1$ à une tension VresetInt lorsque l'on se trouve en dehors d'une phase d'intégration.

Lorsqu'on n'effectue pas d'intégration, le signal S$_{INT}$ peut être mis dans un premier état, par exemple tel que S$_{INT}$=0, de sorte à forcer le bloc 135 générateur d'impulsions dans un premier mode de fonctionnement dans lequel il adresse en continu en sortie un signal de réinitialisation sur la grille du transistor de réinitialisation Mr1 et permet de rendre passant ce dernier, et ce quelle que soit la valeur sur son entrée E1.

Lors d'une phase d'intégration, le signal S$_{INT}$ est typiquement mis dans un état différent, par exemple tel que S$_{INT}$=1, pour lequel le bloc 135 générateur d'impulsion fonctionne dans un deuxième mode dit « normal » pendant lequel il ne génère une impulsion de réinitialisation cette fois qu'à chaque dépassement de seuil, autrement dit que lorsque qu'à son entrée un signal indique un dépassement de la tension Vref.

Ainsi, le circuit de commande 199 est configuré pour, selon une première partie (première partie Φ$_{41}$ de la phase Φ$_4$ sur la figure 4) de la phase d'évaluation du rapport R, rendre passants le premier transistor de réinitialisation Mr1 et le deuxième transistor de réinitialisation Mr2 afin respectivement de ré-initialiser la capacité d'intégration C$_{INT}$ en lui appliquant la tension de réintialisation VresetInt et ré-initialiser la capacité de mémorisation C$_{MEM}$ en lui appliquant la tension de réinitialisation Vresetmem et de rendre non-passant ledit interrupteur de mémorisation 121 afin de déconnecter la capacité d'intégration C$_{INT}$ de la capacité de mémorisation C$_{MEM}$.

Dans l'exemple de réalisation particulier illustré sur les figures 3 et 4 où le transistor de réinitialisation Mr$_2$ est de type NMOS, un signal Sresetmem mis à l'état haut (durant la première partie Φ$_{41}$ de la phase Φ$_4$) sur sa grille permet de réinitialiser la capacité de mémorisation C$_{MEM}$.

Dans l'exemple de réalisation particulier illustré sur les figures 3 et 4 où le transistor de couplage 121 est un transistor de type NMOS, un signal S$_{121}$ mis à l'état bas (durant la partie Φ$_{41}$ de la phase Φ$_4$) sur sa grille permet d'isoler la capacité d'intégration C$_{INT}$ de la capacité de mémorisation C$_{MEM}$.

Au cours de la première partie (partie Φ$_{41}$ de la phase Φ$_4$) de la phase d'évaluation du rapport R, le signal Srap appliqué sur la grille du transistor Mc de découplage est modifié (mise à l'état haut de Srap dans la partie Φ$_{41}$ dans l'exemple de réalisation particulier où Mc est de type PMOS) de sorte à découpler le photo-détecteur 102 de la capacité d'intégration C$_{INT}$.

Le signal S$_{INT}$ est quant à lui typiquement mis dans un état de sorte à placer le bloc générateur 135 d'impulsions dans son premier mode de fonctionnement décrit plus haut. Selon une deuxième partie (partie Φ$_{42}$ de la phase Φ$_4$) de cette phase d'évaluation du rapport R dans le cycle de mesure, le circuit de commande 199 rend non-passants le premier transistor de réinitialisation Mr1 et le deuxième transistor de réinitialisation Mr2 et passant l'interrupteur 121 de mémorisation de sorte à relier le premier noeud N1 et le deuxième noeud N2. Cela se traduit par un changement d'état des signaux S$_{INT}$, S$_{resetmem}$ et S$_{121}$, dans la partie Φ$_{42}$ du chronogramme de la figure 4. Le signal S$_{INT}$ est alors mis dans un état de sorte à placer le bloc générateur 135 d'impulsions dans son deuxième mode de fonctionnement, autrement dit son mode de fonctionnement normal décrit plus haut.

Ainsi, durant la phase d'évaluation Φ$_4$ du rapport R, le bloc 135 est alternativement mis dans son premier mode de fonctionnement puis dans son deuxième mode de fonctionnement.

Le rapport R peut être alors évalué en évaluant le potentiel au deuxième noeud N$_2$.

On peut lire ainsi une tension Vf sur ce deuxième noeud N$_2$ par le biais d'un suiveur. Ainsi, dans l'exemple illustré, le circuit de lecture 110 est doté en outre d'un transistor M$_{11}$ suiveur couplé au deuxième noeud N$_2$ et d'un transistor M$_{21}$ de sélection de ligne. La sélection est effectuée ici par le biais d'un signal sel appliqué sur la grille du transistor M$_{21}$ de sélection. La tension Vf peut être lue au pied d'une colonne de pixels auquel le pixel Pi,j dont on évalue le rapport R est relié. La tension lue est typiquement convertie en donnée numérisée par le biais d'un convertisseur analogique numérique 150 agencé en pied de colonne.

Cette tension finale Vf, lue au travers du suiveur vérifie l'équation suivante :

[Math 1]

$$V_f(C_{int} + C_{mem}) = C_{mem} V_{resetMem} + C_{int} V_{resetInt,}$$

avec VresetInt et Vresetmem correspondant respectivement à la première tension de réinitialisation et à la deuxième tension de réinitialisation.

Cette équation peut également être exprimée de la manière suivante :

$$R = \frac{C_{int}}{C_{mem}} = \frac{V_{resetMem} - V_f}{V_f - V_{resetInt}}$$

Chaque pixel de l'imageur pouvant avoir rapport un rapport

$$R = \frac{C_{int}}{C_{mem}}$$

qui lui est propre, ce rapport

$$R = \frac{C_{int}}{C_{mem}}$$

est avantageusement évalué pour chacun des pixels de l'imageur.

Le circuit de lecture 110 comporte typiquement en outre un comparateur 130 en amont du générateur d'impulsions 135 et qui est doté d'une première entrée E1 couplée à la capacité d'intégration $C_{INT}$ et d'une deuxième entrée E2 mise à une tension de référence Vréf que l'on peut également chercher à vouloir mesurer ou évaluer pour chaque pixel de la matrice et en particulier pour un pixel Pi,j tel qu'illustré sur la figure 3.

En sortie du comparateur 130 est prévu le bloc générateur d'impulsions 135. Ce bloc générateur d'impulsions 135 par exemple doté d'un monostable et d'éléments interrupteurs, est configuré pour, dans son deuxième mode de fonctionnement dit « normal » lorsque la première entrée E1 atteint la tension de référence Vref, émettre une impulsion de déclenchement d'une réinitialisation de la capacité d'intégration $C_{INT}$ par l'intermédiaire du premier transistor de réinitialisation Mr1. Lorsque la tension de référence Vref est atteinte, la sortie du comparateur 130 bascule ce qui entraine l'émission d'une impulsion en sortie du bloc générateur 135 qui est appliquée sur la grille du premier transistorde réinitialisation Mr1, lequel impose alors la tension de réinitialisation VresetInt à la capacité d'intégration $C_{INT}$ par rebouclage sur le premier noeud $N_1$.

En sortie du bloc générateur d'impulsion 135, le circuit de lecture 110 comporte ici typiquement un compteur 140 d'impulsions intégré et un élément de mémorisation 144 de données numérique de comptage en sortie du compteur 140 d'impulsions.

Le circuit de lecture 110 est également doté d'un circuit de commutation comprenant un premier interrupteur 132 agencé entre la sortie du comparateur 130 et le premier transistor de réinitialisation Mr1 ainsi qu'un deuxième interrupteur 134 agencé entre la sortie du bloc générateur 135 d'impulsions et le premier transistor de réinitialisation Mr1. Le premier interrupteur 132 est prévu pour, en fonction de l'état d'un signal Scalib émis par le circuit de commande 199 alternativement connecter la sortie du comparateur 130 directement au premier transistor de réinitialisation Mr1 ou déconnecter la sortie dudit comparateur 130 du premier transistor de réinitialisation Mr1.

Le deuxième interrupteur 134 est prévu pour, en fonction de l'état d'un signal Scalib émis par le circuit de commande 199 alternativement connecter la sortie du bloc générateur 135 d'impulsions au premier transistor de réinitialisation Mr1 ou déconnecter la sortie du bloc générateur 135 d'impulsions du transistor de réinitialisation Mr1.

Le premier interrupteur 132 et le deuxième interrupteur 134 sont ici tous les deux commandés par le signal Scalib.

Durant la phase $\Phi_1$ de la calibration, le signal Scalib est dans un premier état logique, par exemple tel que Scalib= 1, de manière à positionner le premier interrupteur 132 dans un état passant (i.e. fermé) et le deuxième interrupteur 134 dans un état non-passant (i.e. ouvert). La contre-réaction est alors réalisée par la sortie du comparateur 130 qui commande le premier transistor de réinitialisation Mr1. Dans cette configuration le premier noeud N1 peut s'établir à une tension Vref+Voffset.

Un changement d'état du signal Scalib, provoque un changement des états respectifs des deux interrupteurs 132, 134. Ainsi lorsque le signal Scalib est dans un deuxième état logique, par exemple tel que Scalib= 0, le premier interrupteur 132 est mis dans un état non-passant (i.e. ouvert) et le deuxième interrupteur 134 dans un état passant (i.e. fermé). La contre-réaction est alors réalisée par la sortie du bloc générateur d'impulsion 135.

Ainsi, le circuit de commutation muni des interrupteurs 132, 134 permet de réaliser différentes configurations. On relie en particulier directement la sortie du comparateur 130 au transistor de réinitialisation Mr1 lors d'au moins une phase d'un cycle de mesure tandis qu'on relie la sortie du bloc générateur 135 d'impulsions au premier transistor de réinitialisation Mr1 lors d'au moins une autre phase du cycle de mesure ou d'un cycle dit « de fonctionnement normal ».

D'autres informations que le rapport R évoqué précédemment sont de préférence évaluées en complément pour pouvoir réaliser une calibration efficace du pixel Pi,j.

Un cycle de mesure mis en oeuvre sur le pixel Pi,j peut ainsi également comprendre une phase d'évaluation de la valeur de la tension de référence Vréf à l'entrée E1 du comparateur 130. Une telle phase d'évaluation de la tension de référence Vréf peut être réalisée préalablement à la phase d'évaluation du rapport R dans un cycle de mesure.

Ainsi, dans l'exemple de réalisation illustré sur la figure 4, une telle phase d'évaluation de la tension de référence Vréf en entrée du comparateur 130 (portion Φ1 du chronogramme de la figure 4) correspond à la première phase d'un cycle de mesure au cours duquel on évalue également le rapport R de la manière décrite précédemment.

Lors de cette phase d'évaluation, le circuit de commande 199 rend passant le premier interrupteur 132 tout en rendant non-passant le deuxième interrupteur 134, tandis que le premier noeud est connecté au deuxième noeud par l'intermédiaire de l'interrupteur 121 rendu passant de sorte à pouvoir évaluer une valeur de la tension de référence Vréf en fonction d'un potentiel audit deuxième noeud.

Un cycle de mesure mis en oeuvre sur le pixel Pi,j peut également comprendre une phase d'évaluation d'une valeur de la tension Vresetmem de réinitialisation de la capacité de mémorisation $C_{MEM}$.

Une telle phase d'évaluation de la deuxième tension de réinitialisation Vresetmem peut être réalisée avant la phase d'évaluation du rapport R dans le cycle de mesure.

Dans l'exemple de réalisation illustré sur la figure 4, une telle phase de d'évaluation (portion Φ2 du chronogramme de la figure 4) est réalisée après la phase d'évaluation de la tension Vréf (correspondant à la portion Φ1) et avant la phase d'évaluation du rapport R (portion (D4) et correspond en particulier à la deuxième phase du cycle de mesure.

Pour effectuer cette phase, le circuit de commande 199 est configuré pour réinitialiser la capacité de mémorisation $C_{MEM}$ tout en rendant non-passant ledit interrupteur 121 de mémorisation. On déconnecte ainsi la capacité d'intégration $C_{INT}$ de la capacité de mémorisation $C_{MEM}$.

Une évaluation du potentiel au deuxième noeud $N_2$ consécutive à cette réinitialisation par le biais du suiveur $M_{11}$ peut alors permettre d'obtenir une mesure de la deuxième tension de réinitialisation Vresetmem pour le pixel Pi,j.

Un cycle de mesure mis en oeuvre sur le pixel Pi,j peut également comprendre une phase d'évaluation d'une valeur de la tension de la tension Vresetint de réinitialisation de la capacité d'intégration $C_{INT}$.

Une telle phase d'évaluation de la première tension de réinitialisation Vresetint peut être réalisée avant la phase d'évaluation du rapport R dans un cycle de mesure.

Dans l'exemple de réalisation illustré sur la figure 4, une telle phase de réinitialisation de la capacité d'intégration $C_{INT}$ (portion Φ3 du chronogramme) correspond en particulier à la troisième phase du cycle de mesure. Pour effectuer cette phase, le circuit de commande 199 est configuré pour modifier le signal $S_{INT}$ adressé au bloc 135 générateur d'impulsions, afin que ce bloc 135 soit mis dans son premier mode de fonctionnement. Dans ce premier mode de fonctionnement, quelle que soit la valeur de son entrée, le bloc 135 génère en continu un signal de réinitialisation sur la grille du transistor de réinitialisation Mr1 et permet de rendre passant ce dernier pour réinitialiser la capacité d'intégration $C_{INT}$. Le circuit de commande 199 rend en outre passant ledit interrupteur 121 de mémorisation par l'intermédiaire d'un signal $S_{121}$. On connecte ainsi la capacité d'intégration $C_{INT}$ et la capacité de mémorisation $C_{MEM}$.

Une évaluation du potentiel au deuxième noeud $N_2$ consécutive à cette réinitialisation par le biais du suiveur peut alors permettre d'obtenir une mesure de la première tension de réinitialisation Vresetint pour le pixel Pi,j.

Grâce à ces valeurs obtenues pour chaque pixel lors d'un cycle de mesure on peut calculer le signal intégré par chaque pixel indépendamment. Comme indiqué précédemment, une lecture précise d'un courant utilise deux valeurs : celle du compteur 140 et une tension de résidu.

Ces deux valeurs peuvent être exprimées en charges par le biais de l'expression suivante :

[Math 5]

$$Q_{compteur} = N_{compteur} * C_{int} * (V_{ref} - V_{resetInt})$$

Et

$$Q_{résidu} = (C_{mem} + C_{int}) * V_f - C_{mem} * V_{resetMem} - C_{int} * V_{resetInt}$$

Avec Vf étant la tension de résidu lue à la fin de l'intégration sur la capacité de mémorisation.

Le cycle de mesure nous permet d'obtenir les valeurs de Vref, VresetInt, VresetMem et du rapport R = Cint/Cmem.

Qrésidu peut donc être réécrit afin de ne plus dépendre de Cmem.

$$Q_{\text{résidu}} = \left(\frac{C_{\text{int}}}{\text{rapport}} + C_{\text{int}}\right) * V_f - \frac{C_{\text{int}}}{\text{rapport}} * V_{\text{resetMem}} - C_{\text{int}} * V_{\text{resetInt}}$$

$$Q_{\text{résidu}} = C_{\text{int}} * \left(\left(\frac{1}{\text{rapport}} + 1\right) * V_f - \frac{1}{\text{rapport}} * V_{\text{resetMem}} - V_{\text{resetInt}}\right)$$

Donc dans la charge totale, comprenant celle de Qcompteur et de Qrésidu, il n'y a plus que Cint qui n'est pas évalué pour chaque pixel. S'il y a des variations sur Cint entre pixels, cela créera une erreur de gain entre pixels sur la charge totale. Une telle variation de gain peut être mesurée et corrigée en réalisant des mesures tout en soumettant le photo-détecteur sous au moins deux flux lumineux différents.

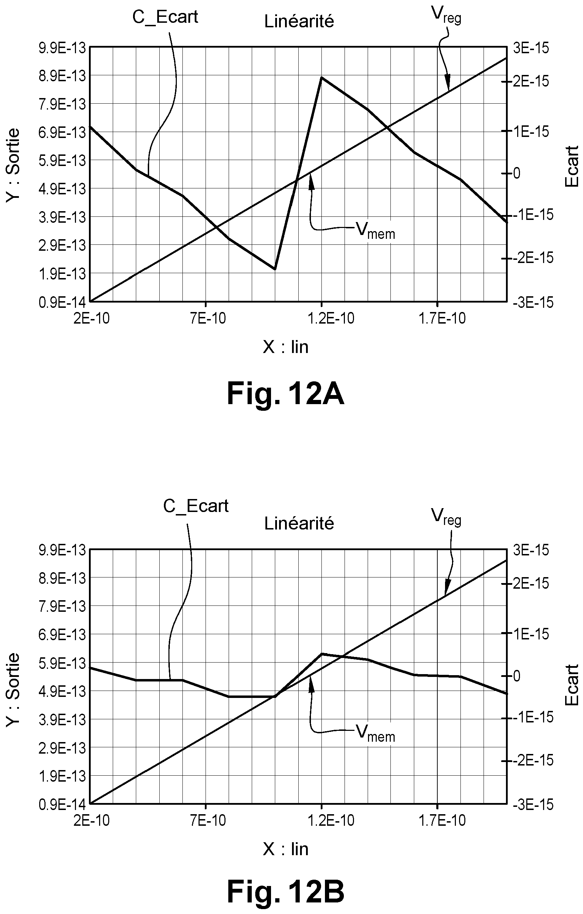

Afin de montrer l'intérêt d'une mesure du rapport R = Cint/Cmem une simulation de linéarité d'un pixel a été mise en oeuvre et est illustrée sur la figure 12A.

Sur cette figure, Vmem est un signal mesuré en sortie de pixel en fonction du flux. Vreg est une droite obtenue à partir d'une régression linéaire. L'erreur entre les deux est faible ce qui implique qu'elles sont superposées. C_Ecart représente l'écart entre ces deux valeurs et donc la non-linéarité.

Pour calculer la charge totale intégrée correspondant à chaque flux, des valeurs des capacités d'intégration et de capacité de mémorisation implantées sont fixées.

On constate que le rapport R est différent de celui que l'on trouve si l'on prend un rapport des valeurs de capacité implantées.

Lorsque l'on utilise les valeurs de capacité obtenues à l'aide d'un cycle de mesure tel que décrit précédemment, on obtient une nouvelle courbe de non-linéarité telle qu'illustrée sur la figure 12B.

Un rapport idéal pour R en prenant seulement en compte les valeurs de capacités est dans cet exemple de 6, tandis que les résultats de calibration permettent de calculer un R réel de 5.706.

Dans une variante de réalisation illustrée sur la figure 5 du pixel Pi,j, le courant émis par la photodiode 102 traverse une structure dite d'injection directe (DI pour « Direct Injection ») qui sert à polariser la photodiode 102 de manière appropriée. La structure de polarisation est ici sous forme d'un transistor $M_{DI}$ d'injection directe et permet de maintenir une polarisation fixe sur la photodiode 102 lors de l'intégration de courant par la capacité d'intégration $C_{INT}$ et d'isoler la photodiode 102 des variations de la tension aux bornes la capacité d'intégration $C_{INT}$. Le transistor $M_{DI}$ d'injection directe est agencé entre une électrode de la photodiode 102 et une électrode du transistor de couplage Mc. Le transistor de couplage est quant à lui agencé entre une électrode du transistor $M_{DI}$ et la capacité d'intégration $C_{INT}$.

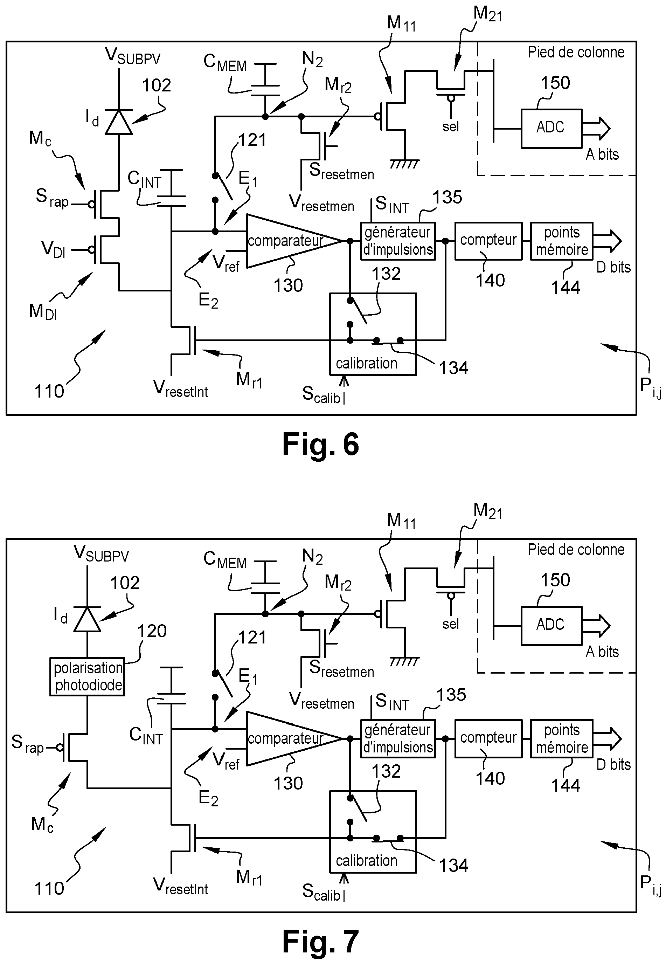

Une répartition inverse entre le transistor $M_{DI}$ d'injection directe et le transistor de couplage Mc peut être prévue. Ainsi, dans l'exemple de réalisation illustré sur la figure 7, le transistor de couplage Mc est agencé entre une électrode de la photodiode 102 et une électrode du transistor $M_{DI}$ d'injection directe. Le transistor d'injection directe $M_{DI}$ est quant à lui agencé entre une électrode du transistor $M_c$ de couplage et la capacité d'intégration $C_{INT}$.

Une structure de polarisation distincte d'un montage par injection direct (DI) peut-être également prévue.

Ainsi, dans l'exemple de réalisation illustré sur la figure 7, un bloc 120 de polarisation de la photodiode 120 est agencé entre la photodiode 102 et le transistor de couplage Mc. Ce bloc de polarisation 120 peut, selon un exemple de réalisation particulier, suivre un montage par exemple de type BDI (pour « Buffered Direct Injection »). Dans ce type de montage, un amplificateur, en particulier un amplificateur différentiel de gain A est prévu et comporte typiquement une entrée mise à une tension fixe et une autre entrée couplée à une électrode de drain ou de source d'un transistor d'injection directe, l'autre électrode de source ou de drain de ce transistor DI étant relié à la photodiode. Une sortie de l'amplificateur A régit la tension de grille du transistor d'injection directe. Il y a donc une contre-réaction établie sur un signal servant à polariser la photodiode 102. Une telle architecture de polarisation répond à un besoin de diminution de l'impédance d'entrée du circuit de lecture 110, tout en limitant le nombre de transistors supplémentaires nécessaires.

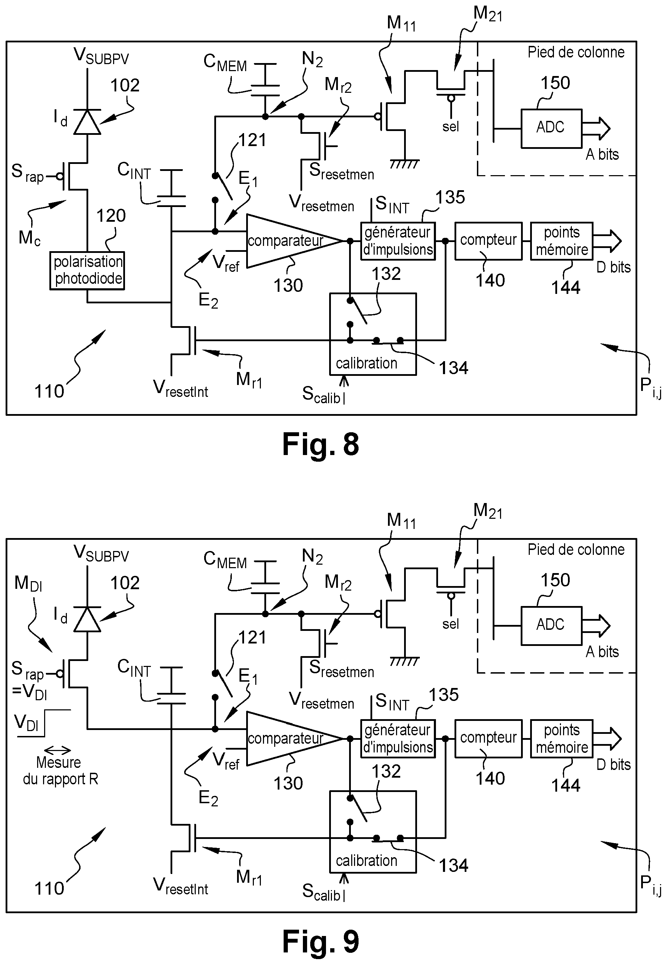

Là encore, une répartition inverse entre le bloc de polarisation 120 et le transistor de couplage Mc peut être prévue. Ainsi, dans l'exemple de réalisation illustré sur la figure 8, le transistor de couplage Mc est agencé entre une électrode de la photodiode 102 et le bloc de polarisation 120. Le bloc de polarisation 120 est quant à lui agencé entre une électrode du transistor Mc de couplage et la capacité d'intégration $C_{INT}$.

Dans une autre variante de réalisation illustrée sur la figure 9, le transistor d'injection directe $M_{DI}$ qui sert à polariser la photodiode 102 remplit également la fonction transistor de couplage pour alternativement coupler la photodiode 102 à la capacité au reste du circuit de lecture 110 et en particulier à la capacité d'intégration $C_{INT}$, et découpler (i.e. isoler) la photodiode 102 du reste du circuit de lecture 110 et en particulier de la capacité d'intégration $C_{INT}$. Ainsi, comme indiqué précédemment, lors d'une phase d'évaluation du rapport R d'un cycle de mesure où la photodiode 102 est tout d'abord couplée au circuit de lecture 110, une modification du signal Srap appliqué sur la grille du transistor de couplage correspondant ici au transistor d'injection directe $M_{DI}$ permet de couper le courant de la photodiode 102 vers le circuit de lecture 110. Pendant le cycle de mesure lorsqu'on veut mesurer le rapport R de capacités, on vient modifier cette tension de grille pour qu'elle vienne positionner le transistor en circuit ouvert et non plus en cascode.

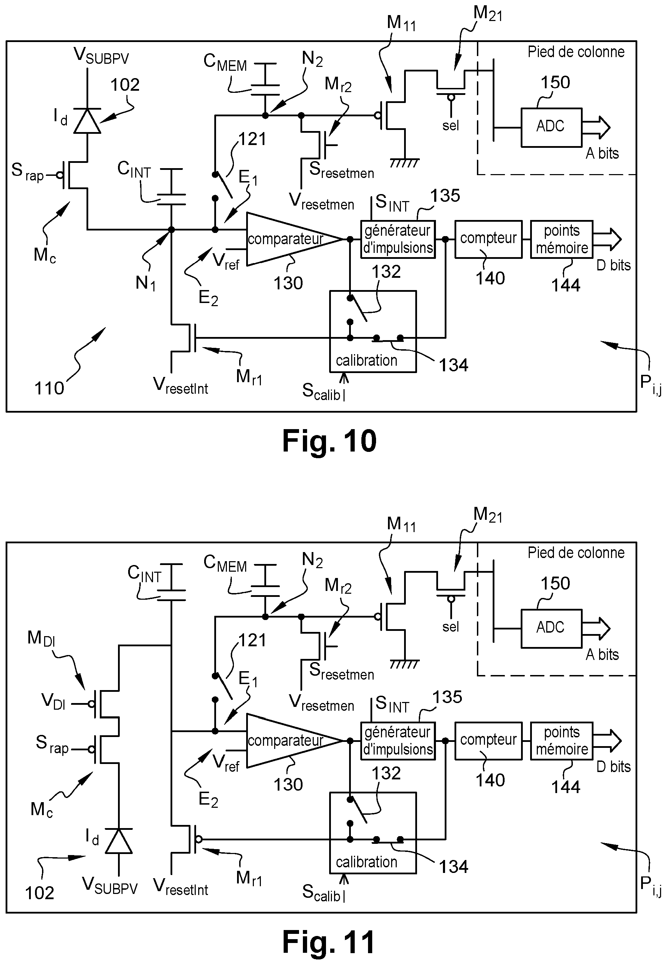

Une réalisation sans étage de polarisation où, comme sur la figure 10, le transistor de couplage Mc est connecté à une électrode de la photodiode 102 et directement au premier noeud $N_1$ est également possible.

En variante de l'un ou l'autre des exemples de réalisation décrits précédemment on peut prévoir, à la place d'une photodiode 102 de type N sur P, une photodiode de type P sur N.

Dans ce cas, les transistors de réinitialisation Mr1, Mr2, peuvent être des transistors de type PMOS. Pour une telle variante, le transistor de couplage Mc et le transistor d'injection directe $M_{DI}$ et peuvent être cette fois des transistors de type NMOS. Le transistor suiveur $M_{11}$ et le transistor $M_{12}$ de sélection de ligne peuvent être également de type NMOS.

Un exemple de réalisation d'une telle variante est illustré par exemple sur la figure 11, où la photodiode 102 de type N sur P comporte une anode mise à un potentiel fixe VSUBPV et une cathode connectée au transistor de couplage Mc.

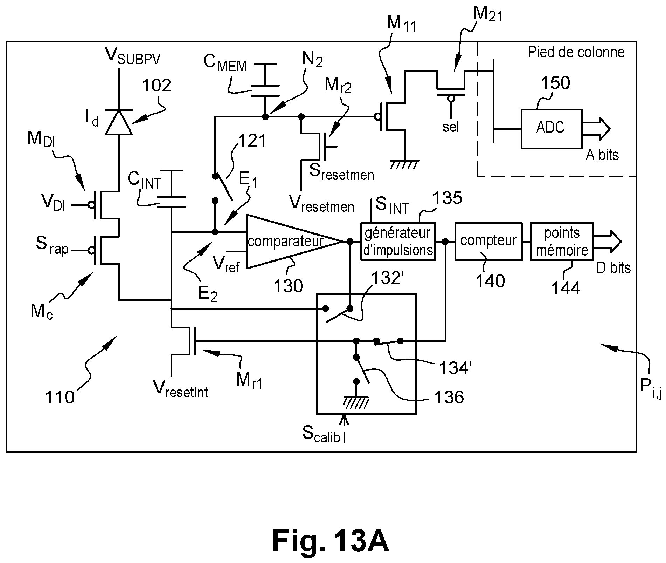

Une variante de réalisation d'un circuit de lecture tel que décrit précédemment est donnée sur les figures 13A-13B.

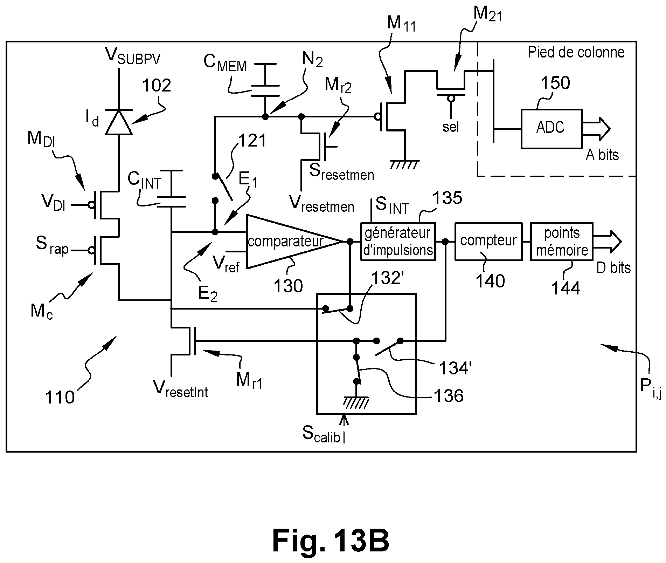

Pour cette variante, dans le mode de fonctionnement normal (figure 13A), un interrupteur 134' appelé deuxième interrupteur agencé entre la sortie du bloc générateur 135 d'impulsions et le premier transistor de réinitialisation Mr1 est fermé (i.e. passant) et des impulsions de réinitialisation sont émises sur la grille du transistor de réinitialisation Mr1. Dans un autre mode de fonctionnement (figure 13B) dans lequel on réalise une ou plusieurs mesures en vue d'effectuer une calibration on vient fermer un interrupteur 132' appelé premier interrupteur et situé entre la sortie et l'entrée E1 du comparateur 130 afin de connecter cette sortie du comparateur 130 à cette entrée E1. Le comparateur 130 est alors monté en suiveur lors de l'évaluation de la tension de référence Vref sur la deuxième entrée E2. On a alors ouvert (i.e. non passant) l'interrupteur 134' et fermé (rendu passant) un interrupteur supplémentaire 136, situé entre ce deuxième interrupteur 134' et le transistor de réinitialisation Mr1.

Cet interrupteur 136 supplémentaire, agencé entre la grille du transistor Mr1 et un potentiel donné, dans cet exemple un potentiel de référence correspondant la masse, permet de s'assurer que l'on vient bien bloquer ou ouvrir le transistor de réinitialisation Mr1 afin qu'il n'intervienne pas dans ce mode de lecture de la tension Vref. Une telle variante de réalisation de la mesure de la tension Vref peut être utilisée indépendamment d'autres moyens de calibration et de mesure précédemment décrits. Notamment, une telle variante de réalisation de mesure de Vref peut être utilisée pour d'autres circuits de lecture d'une photodiode, par exemple dans le cas où une seule capacité d'intégration est présente.

**Revendications**

1. Dispositif imageur comportant une pluralité de pixels chaque pixel (Pi,j) étant formé d'un photo-détecteur (102) associé et connecté à un circuit de lecture (110), comprenant:

   - une capacité d'intégration ($C_{INT}$), connectée à un premier noeud ($N_1$) et prévue pour stocker des charges provenant du photo-détecteur,
   - un premier transistor de réinitialisation (Mr1) configuré pour, lorsqu'il est rendu passant, réinitialiser la capacité d'intégration ($C_{INT}$),
   - au moins un transistor dit « de couplage » (Mc), agencé entre le photo-détecteur (102) et la capacité d'intégration ($C_{INT}$) et apte alternativement à, coupler le photo-détecteur (102) au premier noeud ($N_1$) lorsqu'il est rendu passant, et découpler le photo-détecteur (102) du premier noeud ($N_1$) lorsqu'il est rendu non-passant,
   - une capacité de mémorisation ($C_{MEM}$) connectée à un deuxième noeud ($N_2$),
   - un second transistor de réinitialisation (Mr2) configuré pour, lorsqu'il est rendu passant, réinitialiser la capacité de mémorisation ($C_{MEM}$),
   - un interrupteur (121) dit « de mémorisation » entre la capacité d'intégration ($C_{INT}$) et la capacité de mémorisation ($C_{MEM}$), pour, lorsqu'il est rendu passant, connecter la capacité d'intégration ($C_{INT}$) et la capacité de mémorisation ($C_{MEM}$), et lorsqu'il est rendu non-passant, déconnecter la capacité d'intégration ($C_{INT}$) de la capacité de mémorisation ($C_{MEM}$), le dispositif étant **caractérisé en ce qu'**il comprend en outre : un circuit de commande (199) du circuit de lecture (110) configuré pour, lors d'un cycle de mesure comportant une phase d'estimation d'un rapport (R = Cint/Cmem) entre une valeur estimée de capacité d'intégration et une valeur estimée Cmem de capacité de mémorisation :

- selon une première partie de ladite phase d'estimation dudit rapport (R) rendre passant le premier transistor de réinitialisation (Mr$_1$) et le deuxième transistor de réinitialisation (Mr$_2$) de sorte respectivement à réinitialiser la capacité d'intégration (C$_{INT}$) et la capacité de mémorisation (C$_{MEM}$) et rendre non-passant ledit interrupteur (121) de mémorisation de sorte à déconnecter la capacité d'intégration (C$_{INT}$) de la capacité de mémorisation (C$_{MEM}$) et au cours de la première phase et au cours de la première partie, découpler le photo-détecteur (102) dudit premier noeud (N$_1$), puis,

- selon une deuxième partie de ladite phase d'estimation rendre bloqués le premier transistor de réinitialisation (Mr1) et le deuxième transistor de réinitialisation (Mr2) et rendre passant ledit interrupteur de mémorisation (121) de sorte à relier le premier noeud (N1) et le deuxième noeud (N2), et pouvoir ainsi évaluer un potentiel (Vf) audit deuxième noeud (N2) représentatif dudit rapport (R= Cint/Cmem).

**2.** Dispositif imageur selon la revendication 1, dans lequel le circuit de lecture (110) comporte en outre :

- un comparateur (130) relié à la capacité d'intégration (C$_{INT}$), une première entrée (E1) du comparateur étant couplée au premier noeud (N$_1$), une deuxième entrée (E2) du comparateur (130) étant mise à une tension de référence (Vref),

- un bloc générateur d'impulsions (135) en sortie du comparateur (130) et configuré pour, dans un mode de fonctionnement normal, lorsqu'il est couplé au premier transistor de réinitialisation (Mr$_1$) et lorsque la première entrée (E1) atteint la tension de référence, émettre consécutivement une impulsion de déclenchement d'une réinitialisation de la capacité d'intégration (C$_{INT}$) par l'intermédiaire du premier transistor de réinitialisation (Mr1).

**3.** Dispositif imageur selon la revendication 2, dans lequel le circuit de commande (199) est configuré pour produire un signal (S$_{INT}$) de commande de mode de fonctionnement pour, lors de ladite phase d'estimation dudit rapport,

durant ladite première partie : mettre ledit signal (SINT) de commande de mode de fonctionnement dans un premier état de sorte à placer le bloc générateur d'impulsions (135) dans un premier mode de fonctionnement dans lequel le bloc générateur d'impulsions (135) maintient en sortie quelle que soit la première entrée (E1) un signal de déclenchement d'une réinitialisation de la capacité d'intégration (C$_{INT}$), puis pour,

lors de la deuxième partie : mettre ledit signal (SINT) de commande dans un deuxième état de sorte à placer le bloc générateur d'impulsions (135) dans un deuxième mode correspondant audit mode de fonctionnement normal.

**4.** Dispositif imageur selon l'une des revendications 2 ou 3, dans lequel le circuit de lecture (110) comporte en outre :

- un compteur (140) d'impulsions en sortie du générateur (135) d'impulsions
- un élément de mémorisation (144) de données numérique de comptage issue dudit compteur (140) d'impulsions.

**5.** Dispositif selon l'une des revendications 2 à 4, comprenant en outre un circuit de commutation muni d'au moins un premier interrupteur (132) agencé entre la sortie du comparateur (130) et le premier transistor de réinitialisation (Mr$_1$) et un deuxième interrupteur (134) agencé entre la sortie du générateur (135) d'impulsions, le premier transistor de réinitialisation (Mr1) et le deuxième interrupteur (134) étant pilotés par le circuit de commande (199), le premier interrupteur (132) et le deuxième interrupteur (134) étant prévus pour respectivement, relier directement la sortie du comparateur (130) au transistor de réinitialisation (Mr1) lors d'au moins phase du cycle de mesure d'évaluation de la tension de référence (Vréf), et pour relier la sortie du générateur (135) d'impulsions au premier transistor de réinitialisation (Mr1) lors d'au moins une autre phase du cycle de mesure ou d'un cycle dit « de fonctionnement normal », le circuit de commande (199) du circuit de lecture étant configuré en outre pour, lors de la phase d'évaluation de la tension de référence (Vréf) :

- rendre passant le premier interrupteur (132) tout en rendant non-passant le deuxième interrupteur (134), tout en connectant le premier noeud au deuxième noeud, de sorte à pouvoir évaluer une valeur de la tension de référence (Vréf) en fonction d'un potentiel audit deuxième noeud (N2).

**6.** Dispositif imageur selon l'une des revendications précédentes, dans lequel le second transistor de réinitialisation (Mr2) est apte à réinitialiser la capacité de mémorisation (C$_{MEM}$) à une deuxième tension de réinitialisation (Vresetmem) et dans lequel le circuit de commande (199) est configuré pour, lors d'une phase d'évaluation de la deuxième tension de réinitialisation (Vresetmem) dudit cycle de mesure : réinitialiser la capacité de mémorisation (C$_{MEM}$) tout en rendant non-passant ledit interrupteur (121) de mémorisation de sorte à déconnecter la capacité d'intégration

($C_{INT}$) de la capacité de mémorisation ($C_{MEM}$), et permettre ainsi d'évaluer un potentiel audit deuxième nœud (N2) résultant de cette réinitialisation et représentatif de la deuxième tension de réinitialisation (Vresetmem).

7. Dispositif imageur selon l'une des revendications précédentes, dans lequel ledit premier transistor de réinitialisation (Mr1) est apte à réinitialiser ladite capacité d'intégration ($C_{INT}$) à une première tension de réinitialisation (Vresetint) et dans lequel ledit circuit de commande (199) est configuré pour, lors d'une phase d'évaluation de ladite première tension de réinitialisation (Vresetint) dudit cycle de mesure, déclencher une réinitialisation de la capacité d'intégration ($C_{INT}$) tout en rendant passant ledit interrupteur (121) de mémorisation de sorte à connecter la capacité d'intégration ($C_{INT}$) à la capacité de mémorisation ($C_{MEM}$), et permettre ainsi d'évaluer un potentiel audit deuxième nœud (N2) résultant de cette réinitialisation et représentatif de la première tension de réinitialisation (Vresetint).

8. Dispositif imageur selon l'une des revendications 1 à 7, dans lequel le transistor de couplage (Mc) est agencé en série avec un étage ($M_{DI}$, 120) de polarisation du photo-détecteur (102), en particulier un étage de polarisation à injection directe (DI) ou à injection directe contre-réactionnée (BDI).

9. Dispositif imageur selon l'une des revendications 1 à 8, dans lequel le transistor de couplage (Mc) comporte une électrode parmi ses électrodes de source ou de drain connectée à une électrode du photo-détecteur (102) et une autre électrode parmi ses électrodes de drain ou de source connectée à la capacité d'intégration ($C_{INT}$), le circuit de commande (199) du circuit de lecture (110) étant configuré pour, lors de la première étape de ladite phase d'évaluation dudit rapport R appliquer à la grille du transistor de couplage (Mc), un signal (Srap) de déclenchement du découplage du photo-détecteur (102) avec ledit premier nœud (N1).

10. Dispositif imageur selon la revendication 9, dans lequel le transistor de couplage (Mc) est un transistor de polarisation à injection directe (DI) du photo-détecteur.

11. Dispositif imageur selon l'une des revendications 1 à 10, le circuit de lecture (110) étant doté en outre d'un transistor ($M_{11}$) suiveur couplé au deuxième nœud et d'un transistor ($M_{21}$) de sélection de ligne.

12. Dispositif imageur selon l'une des revendications précédentes, dans lequel le premier transistor de réinitialisation (Mr1) comporte une électrode mise à une première tension de réinitialisation (Vresetint) et dans lequel le second transistor de réinitialisation (Mr2) comporte une électrode mise à une deuxième tension de réinitialisation (Vresetmem) distincte de la première tension de réinitialisation.

**Patentansprüche**

1. Bildgebungsvorrichtung bestehend aus einer Vielzahl von Pixeln, wobei jedes Pixel (Pi,j) aus einem Fotodetektor (102) gebildet wird, der einer Leseschaltung (110) zugeordnet und mit dieser verbunden ist, umfassend:

   - eine Integrationskapazität ($C_{INT}$), die mit einem ersten Knoten ($N_1$) verbunden und zum Speichern von Ladungen aus dem Fotodetektor vorgesehen ist,
   - einen ersten Rücksetztransistor (Mr1), der so konfiguriert ist, dass er, wenn er leitfähig gemacht wird, die Integrationskapazität ($C_{INT}$) zurücksetzt,
   - mindestens einen sogenannten Transistor zum "Koppeln" (Mc), der zwischen dem Fotodetektor (102) und der Integrationskapazität ($C_{INT}$) angeordnet ist und alternativ dazu geeignet ist, den Fotodetektor (102) an den ersten Knoten ($N_1$) zu koppeln, wenn er leitfähig gemacht wird, und den Fotodetektor (102) vom ersten Knoten ($N_1$) zu entkoppeln, wenn er nicht leitfähig gemacht wird,
   - eine Speicherkapazität ($C_{MEM}$), die mit einem zweiten Knoten ($N_2$) verbunden ist,
   - einen zweiten Rücksetztransistor (Mr2), der so konfiguriert ist, dass er, wenn er leitfähig gemacht wird, die Speicherkapazität ($C_{MEM}$) zurücksetzt,
   - einen sogenannten Schalter zum "Speichern" (121) zwischen der Integrationskapazität ($C_{INT}$) und der Speicherkapazität ($C_{MEM}$), um, wenn er leitfähig gemacht wird, die Integrationskapazität ($C_{INT}$) und die Speicherkapazität ($C_{MEM}$) zu verbinden, und, wenn er nicht leitfähig gemacht wird, die Integrationskapazität ($C_{INT}$) von der Speicherkapazität ($C_{MEM}$) zu trennen, wobei die Vorrichtung **dadurch gekennzeichnet ist, dass** sie ferner umfasst: eine Steuerschaltung (199) der Leseschaltung (110), die so konfiguriert ist, dass sie während eines Messzyklus, der eine Phase der Schätzung eines Verhältnisses (R = Cint/Cmem) zwischen einem geschätzten Wert der Integrationskapazität und einem geschätzten Wert Cmem der Speicherkapazität umfasst:

- gemäß einem ersten Teil der Phase der Schätzung des Verhältnisses (R) den ersten Rücksetztransistor ($Mr_1$) und den zweiten Rücksetztransistor ($Mr_2$) leitfähig machen, so dass die Integrationskapazität ($C_{INT}$) bzw. die Speicherkapazität ($C_{MEM}$) zurückgesetzt wird, und den Schalter zum Speichern (121) nicht leitfähig machen, so dass die Integrationskapazität ($C_{INT}$) von der Speicherkapazität ($C_{MEM}$) getrennt wird, und während der ersten Phase und während des ersten Teils, Entkoppeln des Fotodetektors (102) von dem ersten Knoten ($N_1$), und dann

- gemäß einem zweiten Teil der Phase der Schätzung den ersten Rücksetztransistor (Mr1) und den zweiten Rücksetztransistor (Mr2) sperren und den Schalter zum Speichern (121) einschalten, um den ersten Knoten (N1) und den zweiten Knoten (N2) zu verbinden, und so ein Potential (Vf) an dem zweiten Knoten (N2) bewerten zu können, das für das Verhältnis (R= Cint/Cmem) repräsentativ ist.

2. Bildgebungsvorrichtung nach Anspruch 1, wobei die Leseschaltung (110) ferner umfasst:

- einen Komparator (130), der mit der Integrationskapazität ($C_{INT}$) verbunden ist, wobei ein erster Eingang (E1) des Komparators mit dem ersten Knoten ($N_1$) gekoppelt ist und ein zweiter Eingang (E2) des Komparators (130) auf eine Referenzspannung (Vref) gesetzt ist,
- einen Impulsgeneratorblock (135) am Ausgang des Komparators (130), der so konfiguriert ist, dass er in einem normalen Betriebsmodus, wenn er mit dem ersten Rücksetztransistor (Mr1) gekoppelt ist und wenn der erste Eingang (E1) die Referenzspannung erreicht, nacheinander einen Impuls zum Auslösen eines Rücksetzens der Integrationskapazität ($C_{INT}$) über den ersten Rücksetztransistor (Mr1) aussendet.

3. Bildgebungsvorrichtung nach Anspruch 2, wobei die Steuerschaltung (199) so konfiguriert ist, dass sie ein Betriebsmodus-Steuersignal ($S_{INT}$) für während der Phase der Schätzung des Verhältnisses,

während der ersten Phase erzeugt: Setzen des Betriebsmodus-Steuersignals (SINT) in einen ersten Zustand, um den Impulsgeneratorblock (135) in einen ersten Betriebsmodus zu versetzen, in dem der Impulsgeneratorblock (135) unabhängig von dem ersten Eingang (E1) ein Signal zum Auslösen einer Rücksetzung der Integrationskapazität ($C_{INT}$) am Ausgang hält, und dann für,

im zweiten Teil: Setzen des Steuersignals (SINT) in einen zweiten Zustand, so dass der Impulsgeneratorblock (135) in einen zweiten Modus versetzt wird, der dem normalen Betriebsmodus entspricht.

4. Bildgebungsvorrichtung nach einem der Ansprüche 2 oder 3, wobei die Leseschaltung (110) ferner umfasst:

- einen Impulszähler (140) am Ausgang des Impulsgenerators (135)
- ein Speicherelement (144) für digitale Zähldaten aus dem Impulszähler (140).

5. Vorrichtung nach einem der Ansprüche 2 bis 4, die ferner einen Schaltkreis mit mindestens einem ersten Schalter (132), der zwischen dem Ausgang des Komparators (130) und dem ersten Rücksetztransistor (Mr1) angeordnet ist, und einem zweiten Schalter (134), der zwischen dem Ausgang des Impulsgenerators (135) angeordnet ist, umfasst, wobei der erste Rücksetztransistor (Mr1) und der zweite Schalter (134) von der Steuerschaltung (199) gesteuert werden, wobei der erste Schalter (132) und der zweite Schalter (134) jeweils dazu vorgesehen sind, den Ausgang des Komparators (130) direkt mit dem Rücksetztransistor (Mr1) zu verbinden in mindestens einer Phase des Messzyklus zur Bewertung der Referenzspannung (Vref), und um den Ausgang des Impulsgenerators (135) mit dem ersten Rücksetztransistor (Mr1) in mindestens einer anderen Phase des Messzyklus oder eines sogenannten Zyklus "des Normalbetriebs" zu verbinden, wobei die Steuerschaltung (199) der Leseschaltung ferner so konfiguriert ist, dass sie in der Phase der Auswertung der Referenzspannung (Vref):

- den ersten Schalter (132) leitfähig zu machen, während der zweite Schalter (134) nicht leitfähig gemacht wird, während der erste Knoten mit dem zweiten Knoten verbunden wird, so dass ein Wert der Referenzspannung (Vref) in Abhängigkeit von einem Potential an dem zweiten Knoten (N2) ausgewertet werden kann.

6. Bildgebungsvorrichtung nach einem der vorhergehenden Ansprüche, wobei der zweite Rücksetztransistor (Mr2) die Speicherkapazität ($C_{MEM}$) auf eine zweite Rücksetzspannung (Vresetmem) zurücksetzen kann, und wobei die Steuerschaltung (199) so konfiguriert ist, dass sie in einer Phase der Auswertung der zweiten Rücksetzspannung (Vresetmem) des Messzyklus: die Speicherkapazität ($C_{MEM}$) zurückzusetzen, während der Speicherschalter (121) nicht durchlässig gemacht wird, so dass die Integrationskapazität (CINT) von der Speicherkapazität ($C_{MEM}$) getrennt wird, und so die Auswertung eines Potentials am zweiten Knoten (N2) zu ermöglichen, das sich aus dieser Rücksetzung ergibt und für die zweite Rücksetzspannung (Vresetmem) repräsentativ ist.

7. Bildgebungsvorrichtung nach einem der vorhergehenden Ansprüche, wobei der erste Rücksetztransistor (Mr1) die Integrationskapazität ($C_{INT}$) auf eine erste Rücksetzspannung (Vresetint) zurücksetzen kann und wobei die Steuerschaltung (199) so konfiguriert ist, dass sie in einer Phase der Auswertung der ersten Rücksetzspannung (Vresetint) des Messzyklus, ein Zurücksetzen der Integrationskapazität ($C_{INT}$) auszulösen, während der Speicherschalter (121) leitfähig gemacht wird, um die Integrationskapazität ($C_{INT}$) mit der Speicherkapazität ($C_{MEM}$) zu verbinden, und so zu ermöglichen, ein Potenzial an dem zweiten Knoten (N2) auszuwerten, das aus diesem Zurücksetzen resultiert und für die erste Rücksetzspannung (Vresetint) repräsentativ ist.

8. Bildgebungsvorrichtung nach einem der Ansprüche 1 bis 7, wobei der Transistor zum Koppeln (Mc) in Reihe mit einer Vorspannungsstufe ($M_{DI}$, 120) des Fotodetektors (102) angeordnet ist, insbesondere einer Vorspannungsstufe mit direkter Injektion (DI) oder mit rückgekoppelter direkter Injektion (BDI).

9. Bildgebungsvorrichtung nach einem der Ansprüche 1 bis 8, bei der der Transistor zum Koppeln (Mc) eine seiner Source- oder Drain-Elektroden, die mit einer Elektrode des Fotodetektors (102) verbunden ist, und eine andere seiner Drain- oder Source-Elektroden, die mit der Integrationskapazität ($C_{INT}$) verbunden ist, umfasst, wobei die Steuerschaltung (199) der Leseschaltung (110) so konfiguriert ist, dass sie in dem ersten Schritt der Phase der Bewertung des Verhältnisses R an das Gate des Transistors zum Koppeln (Mc) ein Signal (Srap) zum Auslösen der Entkopplung des Fotodetektors (102) mit dem ersten Knoten (N1) anlegt.

10. Bildgebungsvorrichtung nach Anspruch 9, wobei der Transistor zum Koppeln (Mc) ein Vorspannungstransistor mit direkter Injektion (DI) des Fotodetektors ist.

11. Bildgebungsvorrichtung nach einem der Ansprüche 1 bis 10, wobei die Leseschaltung (110) zusätzlich mit einem mit dem zweiten Knoten gekoppelten Mitlauftransistor ($M_{11}$) und einem Zeilenwahltransistor ($M_{21}$) versehen ist.

12. Bildgebungsvorrichtung nach einem der vorhergehenden Ansprüche, wobei der erste Rücksetztransistor (Mr1) eine Elektrode aufweist, die auf eine erste Rücksetzspannung (Vresetint) gelegt ist, und wobei der zweite Rücksetztransistor (Mr2) eine Elektrode aufweist, die auf eine zweite Rücksetzspannung (Vresetmem) gesetzt ist, die von der ersten Rücksetzspannung verschieden ist.

## Claims

1. An imaging device including a plurality of pixels, each pixel (Pi,j) being formed by a photodetector (102) associated and connected to a reading circuit (110), comprising:

   - an integration capacitance ($C_{INT}$), connected to a first node ($N_1$) and intended to store charges originating from the photodetector,
   - a first reset transistor (Mr1) configured, when it is made conducting, to reset the integration capacitance ($C_{INT}$),
   - at least one so-called "coupling" transistor (Mc), arranged between the photodetector (102) and the integration capacitance ($C_{INT}$) and able to, alternately, couple the photodetector (102) to the first node ($N_1$) when it is made conducting, and decouple the photodetector (102) off the first node ($N_1$) when it is made non-conducting,
   - a memorisation capacitance ($C_{MEM}$) connected to a second node ($N_2$),
   - a second reset transistor (Mr2) configured, when it is made conducting, to reset the memorisation capacitance ($C_{MEM}$),
   - a so-called "memorisation" switch (121) between the integration capacitance ($C_{INT}$) and the memorisation capacitance ($C_{MEM}$), when it is made conducting, to connect the integration capacitance ($C_{INT}$) and the memorisation capacitance ($C_{MEM}$), and when it is made non-conducting, to disconnect the integration capacitance ($C_{INT}$) from the memorisation capacitance ($C_{MEM}$),

   the device further comprising: a circuit (199) for controlling the reading circuit (110) configured, during a measurement cycle including a phase of estimating a ratio (R = Cint/Cmem) between an estimated value of the integration capacitance and an estimated value Cmem of the memorisation capacitance:

   - according to a first part of said phase of estimating said ratio (R) to make the first reset transistor (Mr1) and the second reset transistor (Mr2) conducting so as to respectively reset the integration capacitance (CINT) and the memorisation capacitance (CMEM) and to make said memorisation switch (121) non-conducting so as to disconnect the integration capacitance (CINT) from the memorisation capacitance (CMEM) and during the first phase and during the first part, to decouple the photodetector (102) off said first node (N1), then,
- according to a second part of said estimation phase to make the first reset transistor (Mr1) and the second reset transistor (Mr2) non-conducting and to make said memorisation switch (121) conducting so as to connect the first node (N1) and the second node (N2), and thus be able to assess a potential (Vf) at said second node (N2) representative of said ratio (R= Cint/Cmem).

2. The imaging device according to claim 1, wherein the reading circuit (110) further includes:

- a comparator (130) connected to the integration capacitance ($C_{INT}$), a first input (E1) of the comparator being coupled to the first node ($N_1$), a second input (E2) of the comparator (130) being set at a reference voltage (Vref),
- a pulse generator block (135) at the output of the comparator (130) and configured, in a normal operation mode, when it is coupled to the first reset transistor (Mr1) and when the first input (E1) reaches the reference voltage, to consecutively emit a pulse for triggering a reset of the integration capacitance ($C_{INT}$) via the first reset transistor (Mr1).

3. The imaging device according to claim 2, wherein the control circuit (199) is configured to produce an operating mode control signal ($S_{INT}$), during said phase of estimating said ratio,

during said first part: to set said operating mode control signal (SINT) in a first state so as to set the pulse generator block (135) in a first operating mode in which the pulse generator block (135) holds at the output, irrespective of the first input (E1), a signal for triggering a reset of the integration capacitance ($C_{INT}$), then during the second part: to set said control signal (SINT) in a second state so as to set the pulse generator block (135) in a second mode corresponding to said normal operation mode.

4. The imaging device according to one of claims 2 or 3, wherein the reading circuit (110) further includes:

- a pulse counter (140) at the output of the pulse generator (135)
- a element (144) for memorising counting digital data derived from said pulse counter (140).

5. The device according to one of claims 2 to 4, further comprising a switching circuit provided with at least one first switch (132) arranged between the output of the comparator (130) and the first reset transistor (Mr1) and one second switch (134) arranged between the output of the pulse generator (135), the first reset transistor (Mr1) and the second switch (134) being controlled by the control circuit (199), the first switch (132) and the second switch (134) being intended to respectively, directly connect the output of the comparator (130) to the reset transistor (Mr1) during at least one phase of the measurement cycle for assessing the reference voltage (Vref), and to connect the output of the pulse generator (135) to the first reset transistor (Mr1) during at least one other phase of the measurement cycle or of a so-called "normal operation" cycle, the control circuit (199) of the reading circuit being further configured, during the phase of assessing the reference voltage (Vref), to:

- make the first switch (132) conducting while making the second switch (134) non-conducting, while connecting the first node to the second node, so as to be able to assess a value of the reference voltage (Vref) according to a potential at said second node (N2).

6. The imaging device according to one of the preceding claims, wherein the second reset transistor (Mr2) is able to reset the memorisation capacitance ($C_{MEM}$) at a second reset voltage (Vresetmem) and wherein the control circuit (199) is configured, during a phase of assessing the second reset voltage (Vresetmem) of said measurement cycle to: reset the memorisation capacitance (CMEM) while making said memorisation switch (121) non-conducting so as to disconnect the integration capacitance ($C_{INT}$) of the memorisation capacitance ($C_{MEM}$), and thus allow assessing a potential at said second node (N2) resulting from this reset and representative of the second reset voltage (Vresetmem).

7. The imaging device according to one of the preceding claims, wherein said first reset transistor (Mr1) is able to reset said integration capacitance ($C_{INT}$) at a first reset voltage (Vresetint) and wherein said control circuit (199) is configured, during a phase of assessing said first reset voltage (Vresetint) of said measurement cycle, to trigger a reset of the integration capacitance ($C_{INT}$) while making said memorisation switch (121) conducting so as to connect the integration capacitance ($C_{INT}$) to the memorisation capacitance ($C_{MEM}$), and thus allow assessing a potential at said second node (N2) resulting from this reset and representative of the first reset voltage (Vresetint).

8. The imaging device according to one of claims 1 to 7, wherein the coupling transistor (Mc) is arranged in series with a biasing stage ($M_{DI}$, 120) of the photodetector (102), in particular a direct-injection (DI) or buffered direct-injection (BDI) biasing stage.

9. The imaging device according to one of claims 1 to 8, wherein the coupling transistor (Mc) includes an electrode amongst its source or drain electrodes connected to an electrode of the photodetector (102) and another electrode amongst its drain or source electrodes connected to the integration capacitance ($C_{INT}$), the control circuit (199) of the reading circuit (110) being configured, during the first step of said phase of assessing said ratio R, to apply to the gate of the coupling transistor (Mc), a signal (Srap) for triggering decoupling of the photodetector (102) off said first node (N1).

10. The imaging device according to claim 9, wherein the coupling transistor (Mc) is a direct-injection (DI) biasing transistor of the photodetector.

11. The imaging device according to one of claims 1 to 10, the reading circuit (110) being further provided with a follower transistor ($M_{11}$) coupled to the second node and with a line selection transistor ($M_{21}$).

12. The imaging device according to one of the preceding claims, wherein the first reset transistor (Mr1) includes an electrode set at a first reset voltage (Vresetint) and wherein the second reset transistor (Mr2) includes an electrode set at a second reset voltage (Vresetmem) distinct from the first reset voltage.

**Fig. 1**

ART ANTERIEUR

**Fig. 2**

**Fig. 3**

$(R = C_{INT} / C_{MEM})$

$\Phi_1$  $\Phi_2$  $\Phi_3$  $\Phi_{41}$  $\Phi_{42}$

$(V_{ref})$  $(V_{resetmen})$  $(V_{resetInt})$  $\Phi_4$

$S_{INT}$

$S_{resetmen}$

$S_{121}$

$S_{rap}$

$S_{calib}$

sel

**Fig. 4**

$V_{SUBPV}$  $C_{MEM}$  $N_2$  $M_{11}$  $M_{21}$  Pied de colonne

102  $M_{r2}$  150

$I_d$  ADC  A bits

$M_{DI}$  121  sel

$C_{INT}$  $E_1$  $S_{resetmen}$  135

$S_{rap}$  $V_{resetmen}$  $S_{INT}$

$M_c$  comparateur  générateur  compteur  points mémoire  D bits

$V_{ref}$  d'impulsions

$E_2$  130  132  140  144

110  $M_{r1}$  134

$V_{resetInt}$  calibration  $P_{i,j}$

$S_{calib}$

**Fig. 5**

**Fig. 6**

**Fig. 7**

**Fig. 8**

**Fig. 9**

**Fig. 10**

**Fig. 11**

**Fig. 12A**

**Fig. 12B**

**Fig. 13A**

**Fig. 13B**

## RÉFÉRENCES CITÉES DANS LA DESCRIPTION

**Documents brevets cités dans la description**

- EP 2687020 B1